Europäisches Patentamt

European Patent Office

Office européen des brevets

(11) Publication number: **0 304 707**
**A1**

## EUROPEAN PATENT APPLICATION

(21) Application number: **88112813.6**

(51) Int. Cl.⁴: **F23R 3/40**

(22) Date of filing: **05.08.88**

(30) Priority: **24.08.87 US 92848**

(43) Date of publication of application:
**01.03.89 Bulletin 89/09**

(84) Designated Contracting States:
**CH DE FR GB IT LI NL SE**

(71) Applicant: **WESTINGHOUSE ELECTRIC CORPORATION**
**Westinghouse Building Gateway Center**
**Pittsburgh Pennsylvania 15235(US)**

(72) Inventor: **Young, William Elwin**
**2307 Forest Drive**
**Pittsburgh Pennsylvania 15235(US)**
Inventor: **Carl, Dan Eugene**
**Briar Hill Road**
**Orchard Park New York 14127(US)**

(74) Representative: **Fleuchaus, Leo, Dipl.-Ing. et al**
**Melchiorstrasse 42**
**D-8000 München 71(DE)**

(54) **Passively cooled catalytic combustor for a stationary combustion turbine.**

(57) A catalytic combustor unit for a stationary combustion turbine includes a substrate (60) having a series of generally parallel passages (64) receiving a heated flow of fuel and air mixture with a catalyst coating applied on the wall surfaces of certain ones (64A) of the passages (64), whereas the others (64B) are free of the catalyst coating such that in the catalyzed passages the mixture is catalytically reacted and in the non-catalyzed passages the mixture provides for cooling of the substrate but upon discharge from these passages and mixing with the hot catalytically reacted gases is also combusted.

FIG. 5

## PASSIVELY COOLED CATALYTIC COMBUSTOR FOR A STATIONARY COMBUSTION TURBINE

The present invention relates generally to stationary combustion turbines and, more particularly, is concerned with a catalytic combustor employing an arrangement of catalyzed and non-catalyzed substrate passages for providing passive cooling of the catalytic combustor.

In the operation of a conventional combustion turbine, intake air from the atmosphere is compressed and heated by rotary action of a multi-vaned compressor component and caused to flow to a plurality of combustor components where fuel is mixed with the compressed air and the mixture ignited and burned. The heat energy thus released then flows in the combustion gases to the turbine component where it is converted into rotary energy for driving equipment, such as for generating electrical power or for running industrial processes. The combustion gases are finally exhausted from the turbine component back to the atmosphere.

Various schemes have been explored to adapt combustion turbines for the aforementioned uses without exceeding $NO_x$ emission limits. The use of catalytic combustion is a promising approach because it can occur at about 2300 to 2500 degrees F to produce a high turbine inlet temperature for turbine operating efficiency without any significant side effect $NO_x$ generation from reactions between nitrogen and oxygen which occurs at temperatures over 3000 degrees F. In contrast, conventional flame combustion at about 4500 degrees F results in $NO_x$ generation which typically exceeds the limits set in more restrictive areas such as California.

In a typical catalytic combustor, such as disclosed in U.S. Patent No. 4,413,470 and Canadian Patent No. 1,169,257, active catalysts being supported (i.e. coated) on various substrates (e.g. ceramic honeycomb structures) provide an effective means of initiating and stabilizing the combustion process when they are used with suitable mixtures of fuel and air. These combustion catalysts have several desirable characteristics they are capable of minimizing $NO_x$ emission and improving the pattern factor. However, one of their limitations is that their maximum operating temperature tends to be only marginally acceptable as a turbine inlet temperature.

This limitation is inherent in the way the typical catalytic combustor operates. Catalysts initiate the combustion reaction at their surfaces and at temperatures lower than normal ignition temperature. However, once the reaction is initiated, it continues in the gas stream and persists beyond the catalyst in the form of afterburning. Simultaneously, the catalyst substrate temperature increases, resulting in an accelerated reaction which moves the reaction zone further upstream in the catalyst. The result may be damage of the catalyst and/or catalyst substrate if the fuel/air ratio is such as to give an excessive catalyst outlet temperature. Presently available catalysts have the capability of extended operation at about 2289 degrees F (1527 degrees K). However, a turbine inlet temperature of around 2500 degrees F (1650 degrees K) is desired. Thus, given the aforementioned current catalyst temperature limits, the catalyst is clearly incapable of providing such turbine inlet temperature.

Accordingly, it is the principal object of the present invention to provide for a technique for meeting turbine inlet temperature requirements without damaging the catalyst.

With this object in view, the present invention resides in a catalytic combustor unit for a stationary combustion turbine, the combination comprising (a) a substrate composed of a plurality of generally parallel passages open at their opposite ends and exposed to a heated flow of fuel and air mixture therethrough; characterized in that only selected ones of said passages are coated with a catalyst while others of said passages are free of said catalyst so as to provide said substrate with an arrangement of catalyzed passages in which said mixture is catalytically reacted and non-catalyzed passages in which said mixture is substantially not reacted but instead provides for cooling of said substrate, the mixture from said non-catalyzed passages being mixed with the gases from said catalyzed passages for immediate combustion downstream of said catalytic combustor unit arrangement of catalyzed and non-catalyzed substrate passages provided for passive cooling of the catalytic combustor which permits the catalyst to function with higher reaction temperatures than otherwise possible and permit the application of the catalytic combustor in higher firing rate combustion turbines. By applying a catalytic coating to a fraction of the walls of the parallel passages of a combustion catalyst substrate, the uncoated passages act to cool the common walls exposed the reacting flow in the coated passages. Additional applications of the invention include tailoring catalyst reactivity to fuel preparation zone characteristics and/or to turbine inlet pattern factor requirements.

Preferably, the substrate is composed of a plurality of intersecting walls defining the generally parallel passages being aligned in rows and columns. The walls have sections which border and define the respective passages. Each wall section is in common with two adjacent passages and has a pair of oppositely-facing surface regions, one of which is exposed to one of the two adjacent passages and the other exposed to the other of the two adjacent passages.

Furthermore, the catalyst coating is applied on selected ones of the wall surface regions exposed to certain ones of the passages, whereas selected others of the wall surfaces exposed to certain others of the passages are free of the catalyst coating. In such manner, the substrate is provided with the arrangement of catalyzed passages in which the mixture is catalytically reacted and non-catalyzed passages in which the mixture is substantially not reacted but instead provides passive cooling of the substrate. Also, the selected ones of the surface regions having catalyst coating thereon and the selected others of the surface regions being free of catalyst coating are on common wall sections such that a catalytic reaction can occur in those passages bordered by the catalyzed surface regions concurrently as cooling occurs in those passages being adjacent thereto and bordered by the non-catalyzed surface regions.

Any arrangement of catalyzed and non-catalyzed passages is possible. In one arrangement, the catalyzed to non-catalyzed passages are in a ratio of one-to-one. In another arrangement, they are in a ratio of three-to-one.

The present invention will become more readily apparent from the following description of an illustrative embodiment of the invention shown in the attached drawings in which:

Figure 1 is a cutaway side elevational detailed view of a conventional stationary combustion turbine.

Fig. 2 is an enlarged view, partly in section, of one of the combustors of the turbine of Fig. 1 modified to incorporate a catalytic combustor constructed in accordance with the principles of the present invention.

Fig. 3 is an enlarged view, partly in section, of the catalytic combustor of Fig. 2, also illustrating the downstream end of a combustor and upstream end of a transi tion duct which both are positioned in flow communication with the catalytic combustor.

Fig. 4 is a schematic longitudinal sectional view of a portion of the substrate of the catalytic combustor, illustrating catalyzed and non-catalyzed passages therein.

Fig. 5 is a schematic end view of the catalytic combustor substrate, illustrating one arrangement of the catalyzed and non-catalyzed passages in a one-to-one ratio therein.

Fig. 6 is also a schematic end view of the catalytic combustor substrate, illustrating another arrangement of the catalyzed and non-catalyzed passages in a three-to-one ratio therein.

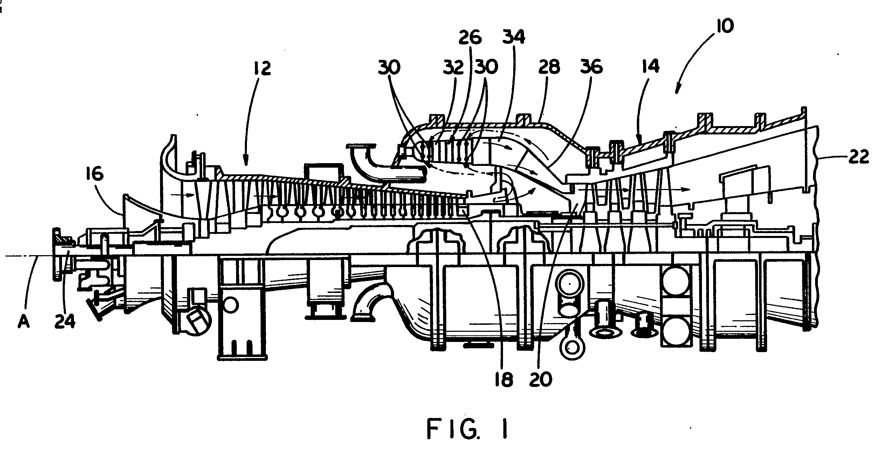

Fig. 1 shows in detail a combustion turbine 10 of the type used for driving equipment (not shown) for generating electrical power or for running industrial processes. The particular turbine of the illustrated embodiment is Westinghouse model W501D, a 92 megawatt combustion turbine. The combustion turbine 10 basically includes a multi-vaned compressor component 12 and a multi-vaned turbine component 14. The compressor and turbine components 12, 14 both have opposite inlet and outlet ends 16, 18 and 20, 22 and are mounted on a common rotatable shaft 24 which defines a longitudinal rotational axis A of the turbine 10.

Also, the turbine 10 includes a plurality of hollow elongated combustor components 26, for instance sixteen in number, being spaced circumferentially from one another about the outlet end 18 of the compressor component 12 and radially from the longitudinal axis A of the turbine. The combustor components 26 are housed in a large cylindrical casing 28 which surrounds the compressor component outlet end 18. The casing 28 provides flow communication between the compressor component outlet end 18 and inlet holes 30 in the upstream end portions 32 of the combustor components 26. Each of the downstream ends 34 of the respective combustor components 26 are connected by a hollow transition duct 36 in flow communication with the turbine inlet end 20.

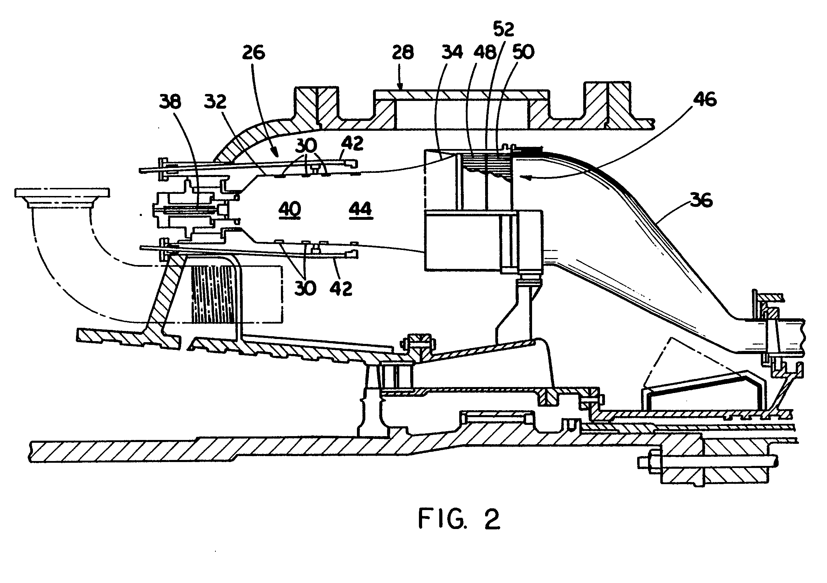

Referring also to Fig. 2, a primary fuel nozzle 38 and an igniter (not shown), which generates a small conventional flame (not shown), are provided in communication with a primary combustion zone 40 defined in the interior of the upstream end portion 32 of each combustor component 26. Forwardmost ones of the inlet holes 30 of the respective combustor components 26 provide flow communication between the interior of the casing 28 and the primary combustion zone 40. In addition, a plurality of secondary fuel nozzles 42 are provided along each of the combustor components 26 and align with rearwardmost ones of the inlet holes 30 and a fuel preparation zone 44 located downstream of the primary combustion zone 40. Between the fuel preparation zone 44 and the transition duct 36 is located a catalytic combustor unit 46 composed of a pair of tandemly-arranged catalytic elements 48, 50.

In the conventional operation of the turbine 10, intake air from the atmosphere is drawn into the compressor component 12 through its inlet end 16, and then compressed and heated therein, by rotational movement of its vanes with the common shaft 24 about the axis A. The compressed and heated air is caused to flow in the direction of the arrows in Fig. 1 through the compressor component 12 and the casing 28 and into the plurality of combustor components 26 through their inlet holes 30 in the upstream end portions 32 thereof.

Carbon fuel from the primary fuel nozzle 38 flows into the primary combustion zone 40 where it is mixed with the heated and compressed air and the mixture ignited and burned, producing a flow of hot combustion gas. At the fuel preparation zone 44, more carbon fuel from the secondary fuel nozzles 42 is entrained and burned in hot gas flow. The hot gas flow then enters the catalytic combustor unit 46 where catalytic combustion occurs. The heat energy thus released is carried in the combustion gas flow through the inlet end 20 of the turbine component 14 wherein it is converted into rotary energy for driving other equipment, such as for generating electrical power, as well as rotating the compressor component 12 of the turbine 10. The combustion gas is finally exhausted from the outlet end 22 of the turbine component 14 back to the atmosphere.

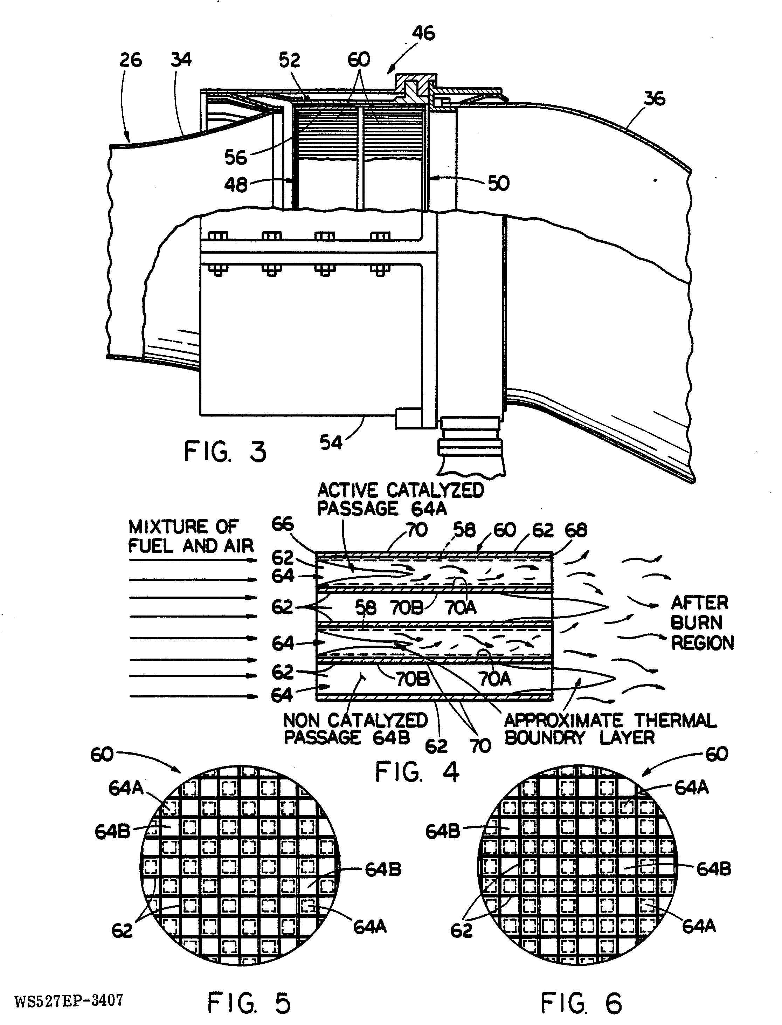

As shown in Fig. 3, the catalytic combustor unit 46 includes a can 52 within which a catalytic monolithic honeycomb structure is supported in the form of elements 48, 50, which are substantially identical to one another. The catalyst characteristics may be as follows:

## DATA FOR DXE-422 CATALYST

### 1. Substrate

Size     (5 cm + 5 cm) long - (6.3 mm gap between two elements)
Material     Zircon Composite
Bulk Density     0.51-0.54 kg/m$^5$
Cell Shape     Corrugated Sinusoid
Number     40 Channels/cm$^2$
Hydraulic Diameter     0.97 cm
Web Thickness     0.254 mm
Open Area     65.5%
Melting Temperature     1675° C

### II. Catalyst

Active Component     Palladium
Washcoat     Stabilized Alumina

As conventionally known, the catalytic can 52 is mounted in a clam shell housing 54. Within the can 52, a compliant layer 56 surrounds the monolithic catalytic elements 48, 50 to absorb vibrations imposed from external sources. The transition duct 36 and the combustor component 26 are connected through the shell housing 54 of the catalytic unit 46. As a result, hot gas flows along a generally sealed path from the fuel preparation zone 44, through the catalytic elements 48, 50 where catalytic combustion occurs when the hot gas contains a fuel-air mixture, and finally through the transition duct 36 to the turbine component 14 inlet end. The mounting of the catalytic unit 46 to the combustor component 26 and transition duct 36 and of the catalytic elements 48, 50 in the can 52 are described in detail in aforecited U.S. Patent 4,413,470. Since such mounting arrangements form no part of the present invention, they will not be repeated herein.

Turning to Figs. 4-6, the present invention relates to the configuration of the catalyst coating 58 applied in the honeycomb structure of the catalytic elements 48, 50. In the preferred embodiment, the honeycomb structure of each element 48, 50 is per se a conventional cylindrical monolithic substrate 60 composed of a plurality of criss-cross intersecting walls 62 defining a series of generally parallel passages 64, being generally rectangular in cross-section, aligned in rows and columns and extending between and open at upstream and downstream ends 66, 68 thereof.

As is readily apparent in Figs. 4-6, successively-located sections 70 of the walls 62 border and define the respective passages 64. Each wall section 70 is common to two adjacent passages 64 and has a pair of oppositely-facing surfaces 70A, 70B, one exposed to one of the two adjacent passages 64 and the other exposed to the other of the two adjacent passages.

The catalyst coating 58 is applied on selected ones of the wall surfaces 70A, 70B exposed to certain ones of the passages 64A, whereas selected others of the wall surfaces 70A, 70B exposed to certain others of the passages 64B are free of the catalyst coating. In such manner, the substrate 60 is provided with the desired arrangement of catalyzed passages 64A in which the mixture is catalytically reacted and non-catalyzed passages 64B in which the mixture is substantially not reacted but instead provides passive cooling of the substrate 60.

It will also be observed that the selected ones of the wall surfaces 70A, 70B having the catalyst coating 58 thereon and the selected others of the wall surfaces 70A, 70B being free of catalyst coating can be on common wall sections such that a catalytic reaction can occur in those passages 64A bordered by the catalyzed surfaces concurrently as cooling occurs in those passages 64B being adjacent thereto and bordered by the non-catalyzed surfaces. Any arrangement of catalyzed and non-catalyzed passages is possible. In one arrangement shown in Fig. 5, the catalyzed passages 64A to non-catalyzed passages 64B are in a ratio of one-to-one. In another arrangement shown in Fig.

6, the catalyzed passages 64A to non-catalyzed passages 64B are in a ratio of three-to-one.

A catalytic combustor unit 46 thus provided with such passive substrate cooling will be able to operate with a richer mixture of fuel and air (i.e., higher firing rates) and at lower velocities without overheating and damaging the catalyst or catalyst substrate. This, in effect, serves to raise the maximum temperature of the catalyst. Another advantage of the arrangement of the present invention is that the reacting passages provide stable, high temperature, continuous, and uniform ignition sources for the balance of the unreacted mixture which then burns at the desired high temperature just downstream of the catalytic combustor unit. In effect, the unit is a hybrid of a catalytic combustor and a flameholder.

It is recognized that any hot surface acts as a catalyst to some degree, hence even the non-catalyzed passages 64B may tend to provide some surface combustion. This effect will be minimized by selecting a ceramic base material with minimal catalytic properties. It may also be possible to control the boundary layer, decrease the surface area, decrease the residence time, and perhaps even provide a chain breaking or ignition delaying surface, such as $P_2O_5$.

By means of the present invention, the catalytic elements can be engineered to provide the reactivity across the unit best tailored to the fuel preparation zone characteristics, or to the requirements of the turbine inlet pattern factor.

## Claims

1. In a catalytic combustor unit (46) for a stationary combustion turbine (10), the combination comprising:

(a) a substrate (60) composed of a plurality of generally parallel passages (64) open at their opposite ends (66, 68) and exposed to a heated flow of fuel and air mixture therethrough; characterized in that only selected ones of said passages (64A) are coated with a catalyst (58) while others of said passages (64B) are free of said catalyst (58) so as to provide said substrate (60) with an arrangement of catalyzed passages (64A) in which said mixture is catalytically reacted and non-catalyzed passages (64B) in which said mixture is substantially not reacted but instead provides for cooling of said substrate (60), the mixture from said non-catalyzed passages being mixed with the gases from said catalyzed passages for immediate combustion downstream of said catalytic combustor unit.

2. The unit (46) as recited in Claim 1, characterized in that said substrate (60) includes a plurality of intersecting walls (62) defining said passages (64A, 64B) and having respective surface regions (70A, 70B) being coated and not coated with said catalyst (58).

3. The unit (46) as recited in Claim 1, characterized in that said substrate (60) includes a plurality of walls (62), each of said walls (62) having sections (70) which border and define the respective passages (64), each wall section (70) being in common with two adjacent passages (64) and having a pair of oppositely-facing surface regions (70A, 70B), one of which is exposed to one of said two adjacent passages (64) and the other exposed to the other of said two adjacent passages (64).

4. A unit (46) as recited in Claim 3, characterized in that selected ones of said surface regions (70A, 70B) of said wall sections (70) are coated with said catalyst (58) and selected others of said surface regions (70A, 70B) of said wall sections (70) are not coated with said catalyst (58) such that a catalytic reaction can occur in a passage (64A) bordered by said one catalyzed surface regions (70A, 70B) of a common wall section (70) concurrently as cooling occurs on said other opposite-facing non-catalyzed surface region (70A, 70B) of said same common wall section (70).

5. A unit (46) as recited in any of claims 1 to 4, characterized in that said catalyzed to non-catalyzed passages (64A, 64B) are in a ratio of one-to-one.

6. A unit (46) as recited in Claims 1 to 4 characterized in that said catalyzed to non-catalyzed passages (64A, 64B) are in a ratio of three-to-one.

FIG. 1

FIG. 2

FIG. 3

**ACTIVE CATALYZED PASSAGE 64A**

MIXTURE OF FUEL AND AIR

AFTER BURN REGION

**NON CATALYZED PASSAGE 64B**

**APPROXIMATE THERMAL BOUNDRY LAYER**

FIG. 4

FIG. 5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACTS OF JAPAN, vol. 8, no. 255 (C-253)[1692], 21st November 1984; & JP-A-59 136 140 (BABCOCK HITACHI K.K.) 04-08-1984 | 1-5 | F 23 R  3/40 |
| A | US-A-4 101 287  (SWEED) * Whole document * | 1-6 | |
| A | GB-A-2 092 291  (THE SECRETARY OF STATE FOR DEFENCE) * Figures 1,2; page 1, lines 88-113 * | 1 | |
| A | EP-A-0 144 094  (TOSHIBA) * Figures 5,6; page 8, line 14 - page 9, line 22 * | 1 | |
| A | PATENT ABSTRACTS OF JAPAN, vol. 9, no. 202 (M-405)[1925], 20th August 1985; & JP-A-60 64 131 (TOSHIBA K.K.) 12-04-1985 | 1 | |
| A | US-A-4 081 958  (SCHELP) * Figures 2,3; column 2, line 35 - column 3, line 12 * | 1 | TECHNICAL FIELDS SEARCHED (Int. Cl.4) |
| A | PROGRESS IN ENERGY AND COMBUSTION SCIENCE, vol. 12, no. 1, December 1986, pages 25-41, Pergamon Journals Ltd, Oxford GB; W.C. PFEFFERLE et al.: "Catalytically stabilized combustion" * Whole article * | 1 | F 23 R F 23 C B 01 J |
| D,A | US-A-4 413 470  (SCHEIHING et al.) | | |
| D,A | CA-A-1 169 257  (WESTINGHOUSE) | | |

The present search report has been drawn up for all claims

| Place of search | Date of completion of the search | Examiner |
|---|---|---|
| THE HAGUE | 02-12-1988 | MCGINLEY C.J. |

EPO FORM 1503 03.82 (P0401)